# EUROPEAN PATENT APPLICATION

(11) **EP 4 451 189 A1**
(43) Date of publication of application: **23.10.2024**
(21) Application number: 22906924.0
(22) Date of filing: 17.08.2022
(51) Int. Cl.: G06Q 10/20, B60S 5/00

(54) **VEHICLE INFORMATION GENERATION SYSTEM AND ELECTRONIC CONTROL DEVICE**

(30) Priority: 15.12.2021 JP 2021203689
(71) Applicant: AISIN CORPORATION, Kariya-shi, Aichi 448-8650 (JP)
(72) Inventor: HONJO, Yutaro, Kariya-shi, Aichi 448-8650 (JP)
(74) Representative: TBK
(86) International application number: PCT/JP2022/031018
(87) International publication number: WO 2023/112388

(57) **Abstract**

A vehicle information generation system includes an electronic control device and a server. The electronic control device includes a computing part that computes a plurality of types of load value about load applied to a vehicle during traveling, based on results of detection obtained by a sensor mounted on the vehicle; an integral processing part that computes integrals of the load values; a gain processing part that computes gain integrals obtained by multiplying the integrals by gains, the gains being set for each part of the vehicle and for each of the load values; and a transmission processing part that performs a process for transmitting the gain integrals to the server. The server includes a generating part that generates vehicle information about damage to the vehicle, based on a total value obtained by adding together the plurality of gain integrals corresponding to the respective plurality of types of load value.

## Description

### TECHNICAL FIELD

Embodiments of the present invention relate to a vehicle information generation system and an electronic control device.

### BACKGROUND ART

In recent years, a system has been used that estimates damage to a component of a vehicle, based on data obtained by a sensor mounted on the vehicle. For such a system, there is a system in which data obtained by a sensor is transmitted from a vehicle to a server and analyzed in the server, by which information about damage to the vehicle is generated.

### CITATIONS LIST

### PATENT LITERATURE

Patent Literature 1: JP 2018-127209 A
Patent Literature 2: JP 2005-227141 A

### SUMMARY OF INVENTION

### TECHNICAL PROBLEMS

However, the conventional system has a problem of high communication load because there is a need to transmit an enormous amount of data from the vehicle to the server to accurately estimate damage to the vehicle.

One of problems of the present invention is therefore to provide a vehicle information generation system and an electronic control device that can generate high-reliability information about damage to a vehicle without increasing communication load.

### SOLUTIONS TO PROBLEMS

A vehicle information generation system which is one embodiment of the present invention is a vehicle information generation system including an electronic control device mounted on a vehicle; and a server that is allowed to communicate with the electronic control device through a communication network, and the electronic control device includes a computing part that computes a plurality of types of load value about load applied to the vehicle during traveling, based on results of detection obtained by a sensor mounted on the vehicle; an integral processing part that computes integrals of the load values; and a transmission processing part that performs a process for transmitting the integrals to the server, and the server includes a gain processing part that computes gain integrals obtained by multiplying the integrals by gains, the gains being set for each part of the vehicle and for each of the load values; and a generating part that generates vehicle information about damage to the vehicle, based on a total value obtained by adding together the plurality of gain integrals corresponding to the respective plurality of types of load value.

By this, high-reliability vehicle information can be generated for each part of the vehicle without increasing communication load.

In addition, the vehicle information may include body damage information generated based on a total value of the plurality of gain integrals computed using gains for a body, the body damage information being information about damage to a vehicle-body portion; and suspension damage information generated based on a total value of the plurality of gain integrals computed using gains for a suspension, the suspension damage information being information about damage to the suspension, and the gains for a suspension being different from the gains for a body.

By this, high-reliability vehicle information can be generated for each of the body and the suspension without increasing communication load.

In addition, the load values may include sprung acceleration for a predetermined sprung resonance frequency band, and the computing part may perform a filtering process in which acceleration data outside the sprung resonance frequency band is removed.

By this, high-reliability vehicle information based on a gain integral of sprung acceleration can be generated without increasing communication load.

In addition, the load values may include unsprung acceleration for a predetermined unsprung resonance frequency band, and the computing part may perform a filtering process in which acceleration data outside the unsprung resonance frequency band is removed.

By this, high-reliability vehicle information based on a gain integral of unsprung acceleration can be generated without increasing communication load.

In addition, the load values may include an amount of warp about torsion of a vehicle body, and the computing part may compute the amount of warp, based on a difference between vehicle-height values of a plurality of wheels or a difference between rotational speeds of a plurality of wheels.

By this, high-reliability vehicle information based on a gain integral of the amount of warp can be generated without increasing communication load.

In addition, the load values may include forward-backward acceleration applied in a front-rear direction of the vehicle.

By this, high-reliability vehicle information based on a gain integral of forward-backward acceleration can be generated without increasing communication load.

In addition, the load values may include left-right acceleration applied in a left-right direction of the vehicle.

By this, high-reliability vehicle information based on a gain integral of left-right acceleration can be generated without increasing communication load.

In addition, the load values may include a number of shocks in which any of the load values has exceeded threshold values, and the generating part may generate the vehicle information, based on the number of shocks.

By this, high-reliability vehicle information based on the number of shocks can be generated without increasing communication load.

In addition, the integral processing part may compute the integrals with respect to time from travel start time to travel end time of the vehicle, and the transmission processing part may perform a process for transmitting the integrals to the server at the travel end time.

By this, communication load can be significantly reduced.

In addition, the server may further include a gain setting part that is allowed to change the gains.

By this, even when deviation occurs between the actual deterioration level of the vehicle and a result of deterioration estimation computation, the gains are easily optimized in view of market conditions.

In addition, a vehicle information generation system which is another embodiment of the present invention is a vehicle information generation system including an electronic control device mounted on a vehicle; and a server that is allowed to communicate with the electronic control device through a communication network, and the electronic control device includes: a computing part that computes a plurality of types of load value about load applied to the vehicle during traveling, based on results of detection obtained by a sensor mounted on the vehicle; an integral processing part that computes integrals of the load values; a gain processing part that computes gain integrals obtained by multiplying the integrals by gains, the gains being set for each part of the vehicle and for each of the load values; and a transmission processing part that performs a process for transmitting the gain integrals to the server, and the server includes a generating part that generates vehicle information about damage to the vehicle, based on a total value obtained by adding together the plurality of gain integrals corresponding to the respective plurality of types of load value.

Even by such a configuration in which the gain processing part is provided on a vehicle side and gain integrals are transmitted from the vehicle to the server, high-reliability vehicle information can be generated without increasing communication load.

In addition, an electronic control device which is another embodiment of the present invention is an electronic control device mounted on a vehicle, and includes a computing part that computes a plurality of types of load value about load applied to the vehicle during traveling, based on results of detection obtained by a sensor mounted on the vehicle; an integral processing part that computes integrals of the load values; and a transmission processing part that performs a process for transmitting the integrals to a server through a communication network, the server being present external to the vehicle.

By this, a vehicle information generation system that can generate high-reliability vehicle information without increasing communication load can be implemented.

In addition, an electronic control device which is another embodiment of the present invention is an electronic control device mounted on a vehicle, and includes a computing part that computes a plurality of types of load value about load applied to the vehicle during traveling, based on results of detection obtained by a sensor mounted on the vehicle; an integral processing part that computes integrals of the load values; a gain processing part that computes gain integrals obtained by multiplying the integrals by gains, the gains being set for each part of the vehicle and for each of the load values; and a transmission processing part that performs a process for transmitting the gain integrals to a server through a communication network, the server being present external to the vehicle.

By this, a vehicle information generation system that can generate high-reliability vehicle information without increasing communication load can be implemented.

### BRIEF DESCRIPTION OF DRAWINGS

FIG. 1 is a block diagram showing an example of a configuration of a vehicle information generation system of a first embodiment.
FIG. 2 is a diagram showing an example of installation states of in-vehicle sensors, suspension mechanisms, and an SC-ECU of the first embodiment.
FIG. 3 is a block diagram showing an example of a functional configuration of the vehicle information generation system of the first embodiment.
FIG. 4 is a flowchart showing an example of a process performed by the vehicle information generation system of the first embodiment.
FIG. 5 is a diagram conceptually showing an example of a process performed by the SC-ECU upon computing an integral of sprung acceleration and an integral of unsprung acceleration of the first embodiment.
FIG. 6 is a diagram conceptually showing an example of a process performed by the SC-ECU upon computing an integral of the amount of warp of the first embodiment.
FIG. 7 is a diagram conceptually showing an example of a process performed by a server upon generating body damage information, based on an integral of sprung acceleration, an integral of unsprung acceleration, and an integral of the amount of warp of the first embodiment.
FIG. 8 is a diagram conceptually showing an example of a process performed by the server upon generating suspension damage information, based on an integral of sprung acceleration, an integral of unsprung acceleration, and an integral of the amount of warp of the first embodiment.
FIG. 9 is a diagram conceptually showing an example of a process performed by the SC-ECU upon computing an integral of forward-backward acceleration and an integral of left-right acceleration of the first embodiment.
FIG. 10 is a diagram conceptually showing an example of a process performed by the server upon generating body damage information, based on an integral of forward-backward acceleration and an integral of left-right acceleration of the first embodiment.
FIG. 11 is a diagram conceptually showing an example of a process performed by the server upon generating suspension damage information, based on an integral of forward-backward acceleration and an integral of left-right acceleration of the first embodiment.
FIG. 12 is a diagram conceptually showing an example of processes performed by the SC-ECU and the server upon generating vehicle information, based on the numbers of shocks of the first embodiment.
FIG. 13 is a block diagram showing an example of a configuration of a vehicle information generation system of a second embodiment.

### DESCRIPTION OF EMBODIMENTS

Illustrative embodiments of the present invention are disclosed below. Configurations of the embodiments shown below and action, results, and advantageous effects that are brought about by the configurations are examples. The present invention can also be implemented by configurations other than the configurations disclosed in the following embodiments, and at least one of various advantageous effects based on a basic configuration and derivative advantageous effects can be obtained.

### (First Embodiment)

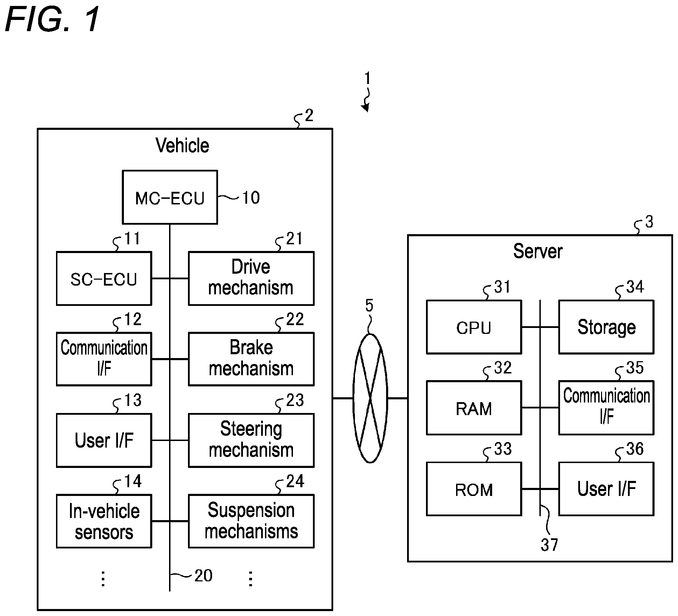

FIG. 1 is a block diagram showing an example of a configuration of a vehicle information generation system 1 of a first embodiment. The vehicle information generation system 1 is a system that includes a vehicle 2 and a server 3 and generates vehicle information about damage to the vehicle 2. The server 3 performs a process for generating vehicle information, based on data received from the vehicle 2 through a communication network 5.

The vehicle 2 includes a Main Control (MC)-Electronic Control Unit (ECU) 10, a Suspension Control (SC)-ECU 11 (an example of an electronic control device), a communication Interface (I/F) 12, a user I/F 13, in-vehicle sensors 14, a drive mechanism 21, a brake mechanism 22, a steering mechanism 23, suspension mechanisms 24, etc. These components 10 to 14 and 21 to 24 are communicably connected to each other through a Controller Area Network (CAN) 20.

The MC-ECU 10 is a unit that performs overall control of the vehicle 2, based on various types of data obtained through the CAN 20. The MC-ECU 10 can be formed using a microprocessor including a Central Processing Unit (CPU) that performs arithmetic processing in accordance with a program, a Field Programmable Gate Array (FPGA), an Application Specific Integrated Circuit (ASIC), etc.

The SC-ECU 11 is a unit that performs a process for controlling the suspension mechanisms 24, based on various types of data obtained through the CAN 20. In addition, the SC-ECU 11 of the present embodiment also performs a process related to generation of vehicle information, in addition to the process for controlling the suspension mechanisms 24. The SC-ECU 11 can be formed using a microprocessor including a CPU that performs arithmetic processing in accordance with a program, an FPGA, an ASIC, etc.

The communication I/F 12 is a unit that establishes communication complying with a predetermined communication protocol, with an external device such as the server 3 through the communication network 5. The user I/F 13 is a unit that performs transmission and reception of information between the vehicle 2 and a user (an occupant of the vehicle 2, etc.), and can be, for example, a display, a speaker, a microphone, a control unit, a touch panel, etc., installed in a vehicle's interior. The in-vehicle sensors 14 are sensors mounted on the vehicle 2, and include acceleration (gravity) sensors, vehicle-height sensors, wheel-speed sensors, a range sensor, etc.

The drive mechanism 21 is a mechanism for generating driving force of the vehicle 2, and is formed using, for example, an engine, a motor, a throttle mechanism, etc. The brake mechanism 22 is a mechanism for generating braking force of the vehicle 2, and is formed using, for example, a brake disc, brake pads, a hydraulic mechanism, a regenerative brake mechanism, etc. The steering mechanism 23 is a mechanism for changing a traveling direction of the vehicle 2, and is formed using, for example, a steering wheel, a linkage mechanism, a power steering mechanism, etc.

The suspension mechanisms 24 each are a mechanism for connecting a vehicle-body portion of the vehicle 2 to an axle to provide shock-absorbing action that absorbs shocks from a road surface, and are formed using a shock absorber (damper), a spring, an actuator, etc. The suspension mechanisms 24 of the present embodiment are electronic control type mechanisms that can adjust damping force, vehicle height, etc., based on control signals from the SC-ECU 11.

Note that the configuration of the vehicle 2 is not limited to that described above. For example, ECUs other than the MC-ECU 10 and the SC-ECU 11 may be connected to the CAN 20.

The server 3 includes a CPU 31, a Random Access Memory (RAM) 32, a Read Only Memory (ROM) 33, a storage 34, a communication I/F 35, a user I/F 36, etc. These components 31 to 36 are communicably connected to each other through a bus 37.

The CPU 31 performs predetermined arithmetic processing using the RAM 32 as a working area, in accordance with a program stored in the ROM 33 or the storage 34. The storage 34 is a large-capacity non-volatile memory such as a Hard Disk Drive (HDD) or a Solid State Drive (SSD), and stores various types of data. The communication I/F 35 is a unit that establishes communication complying with a predetermined communication protocol, with external devices such as the MC-ECU 10 and the SC-ECU 11 which are mounted on the vehicle 2, through the communication network 5. The user I/F 36 is a unit that performs transmission and reception of information between the server 3 and a user (an administrator of the vehicle information generation system 1, etc.), and can be a display, a keyboard, a touch panel, a speaker, a microphone, etc. Note that the configuration of the server 3 is not limited to that described above.

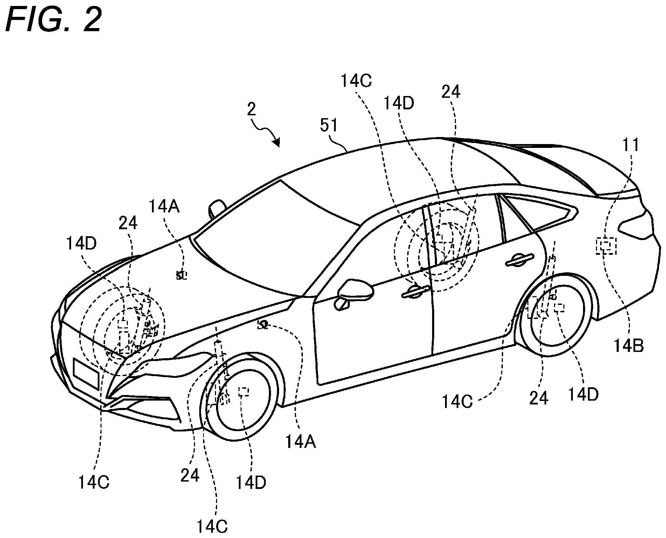

FIG. 2 is a diagram showing an example of installation states of the in-vehicle sensors 14 (14A to 14D), the suspension mechanisms 24, and the SC-ECU 11 of the first embodiment. The in-vehicle sensors 14 of the present embodiment include acceleration sensors 14A and 14B, vehicle-height sensors 14C, and wheel-speed sensors 14D. Note that a sensor group including the acceleration sensors 14A and 14B, the vehicle-height sensors 14C, and the wheel-speed sensors 14D may be collectively referred to as the in-vehicle sensors 14.

The acceleration sensors 14A are disposed on a front side of a vehicle body 51, and the acceleration sensor 14B is disposed on a rear side of the vehicle body 51. The acceleration sensor 14B may be included in the SC-ECU 11. Acceleration in all directions applied to the vehicle 2 (vehicle body 51) can be measured based on detection signals of the acceleration sensors 14A and 14B.

The vehicle-height sensors 14C each are a sensor that detects stroke displacement of a corresponding wheel. A difference between the vehicle-height values of wheels (e.g., a difference between the vehicle-height values of a pair of wheels located on a diagonal line) can be measured based on results of detection obtained by corresponding vehicle-height sensors 14C, and the amount of warp about torsion of the vehicle body 51 can be measured based on the difference between the vehicle-height values.

The wheel-speed sensors 14D each are a sensor that detects a rotational speed of a corresponding wheel. A difference between the rotational speeds of wheels (e.g., a difference between the rotational speeds of a pair of wheels located on a diagonal line) can be measured based on results of detection obtained by corresponding wheel-speed sensors 14D, and the amount of warp can be measured based on the difference between the rotational speeds.

Note that the configuration of the in-vehicle sensors 14 is not limited to that described above. For example, the number and installation locations of the acceleration sensors 14A and 14B are to be determined as appropriate, according to the shape of the vehicle 2, etc.

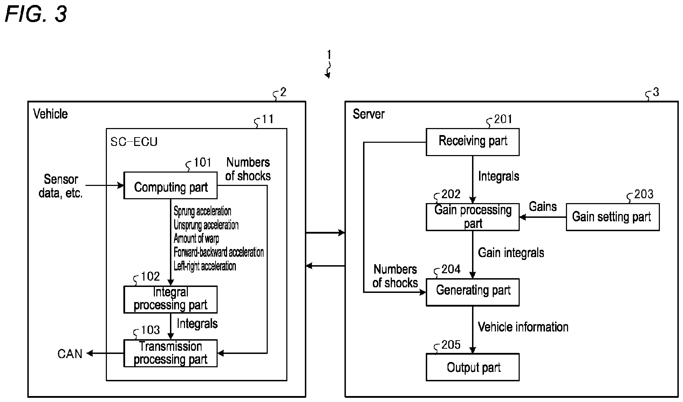

FIG. 3 is a block diagram showing an example of a functional configuration of the vehicle information generation system 1 of the first embodiment. The SC-ECU 11 mounted on the vehicle 2 includes a computing part 101, an integral processing part 102, and a transmission processing part 103. These functional components 101 to 103 can be formed by, for example, cooperation of hardware elements such as the CPU, a memory, and a logic circuit which are included in the SC-ECU 11, and a program (software element) that controls the CPU.

The computing part 101 computes a load value about load on the vehicle 2 applied during traveling, based on results of detection (sensor data) obtained by corresponding in-vehicle sensors 14. The computing part 101 may compute a load value using not only sensor data, but also information from other ECUs which is obtained through the CAN 20, etc. In addition, the computing part 101 may compute a plurality of types of load value. The computing part 101 of the present embodiment computes, as load values, sprung acceleration, unsprung acceleration, the amount of warp, forward-backward acceleration, left-right acceleration, and the numbers of shocks.

The sprung acceleration is acceleration for a predetermined sprung resonance frequency band (e.g., 0.9 Hz to 1.5 Hz) among types of acceleration applied in an up-down direction of the vehicle 2. The unsprung acceleration is acceleration for a predetermined unsprung resonance frequency band (e.g., 10 Hz to 15 Hz) among the types of acceleration applied in the up-down direction of the vehicle 2. The amount of warp is a value representing the degree of torsion of the vehicle body 51. The forward-backward acceleration is acceleration applied in a front-rear direction of the vehicle 2. The left-right acceleration is acceleration applied in a left-right direction of the vehicle 2. The numbers of shocks each are a value representing the number of times acceleration applied to the vehicle 2 (e.g., sprung acceleration, forward-backward acceleration, or left-right acceleration) has exceeded its predetermined threshold values.

The integral processing part 102 computes integrals of the load values computed by the computing part 101. The integrals of the present embodiment include an integral of sprung acceleration, an integral of unsprung acceleration, an integral of the amount of warp, an integral of forward-backward acceleration, and an integral of left-right acceleration which are obtained by integrating each of sprung acceleration, unsprung acceleration, the amount of warp, forward-backward acceleration, and left-right acceleration. The integral processing part 102 computes, for example, integrals with respect to time from the travel start time to travel end time of the vehicle 2. A method of determining travel start time and travel end time is not particularly limited, but, for example, travel start time and travel end time can be determined based on the drive state of the drive mechanism 21 such as an engine or a motor, gearshift position, etc.

The transmission processing part 103 performs a process for transmitting the integrals computed by the integral processing part 102 to the server 3. In addition, the transmission processing part 103 performs a process for transmitting the numbers of shocks computed by the computing part 101 to the server 3. The transmission processing part 103 of the present embodiment outputs data including the integrals and the numbers of shocks to the CAN 20, and instructs the communication I/F 12 to transmit the data to the server 3. The transmission processing part 103 performs a process for transmitting the data, for example, at the travel end time of the vehicle 2.

The server 3 includes a receiving part 201, a gain processing part 202, a gain setting part 203, a generating part 204, and an output part 205. These functional components 201 to 205 can be formed by, for example, cooperation of hardware elements such as the CPU 31 included in the server 3, and a program (software element) that controls the CPU 31, etc.

The receiving part 201 receives the data including the integrals and the numbers of shocks which is transmitted from the vehicle 2 (SC-ECU 11).

The gain processing part 202 computes gain integrals obtained by multiplying the integrals (in the present embodiment, the integral of sprung acceleration, the integral of unsprung acceleration, the integral of the amount of warp, the integral of forward-backward acceleration, and the integral of left-right acceleration) received by the receiving part 201 by gains set for each part of the vehicle 2. The parts of the vehicle 2 are, for example, vehicle-body portions, the suspension mechanisms 24, etc. The vehicle-body portions are, for example, portions that form a framework of the vehicle body 51, such as a chassis and a frame. For example, when the gain processing part 202 computes an integral for the vehicle-body portions, the gain processing part 202 computes a gain integral using a first gain (an example of gains for a body), and when the gain processing part 202 computes an integral for the suspension mechanisms 24, the gain processing part 202 computes a gain integral using a second gain (an example of gains for a suspension) which is different from the first gain. By this, high-reliability vehicle information can be generated for each of the body and the suspensions without increasing communication load.

The gain setting part 203 changes the gains to any value in response to an operation performed by the user (the administrator of the vehicle information generation system 1, etc.).

The generating part 204 generates vehicle information about damage to the vehicle 2, based on the gain integrals computed by the gain processing part 202. Upon generation of the vehicle information, the generating part 204 may generate vehicle information, based on a total value of a plurality of gain integrals corresponding to a respective plurality of types of load value. In addition, the generating part 204 may generate vehicle information, based on the numbers of shocks.

The output part 205 outputs the vehicle information generated by the generating part 204 to a predetermined output destination. The output destination is not particularly limited as long as the output destination is, for example, a system or a device that can use the vehicle information, but the output destination can be, for example, a used-car assessment system or a maintenance management system.

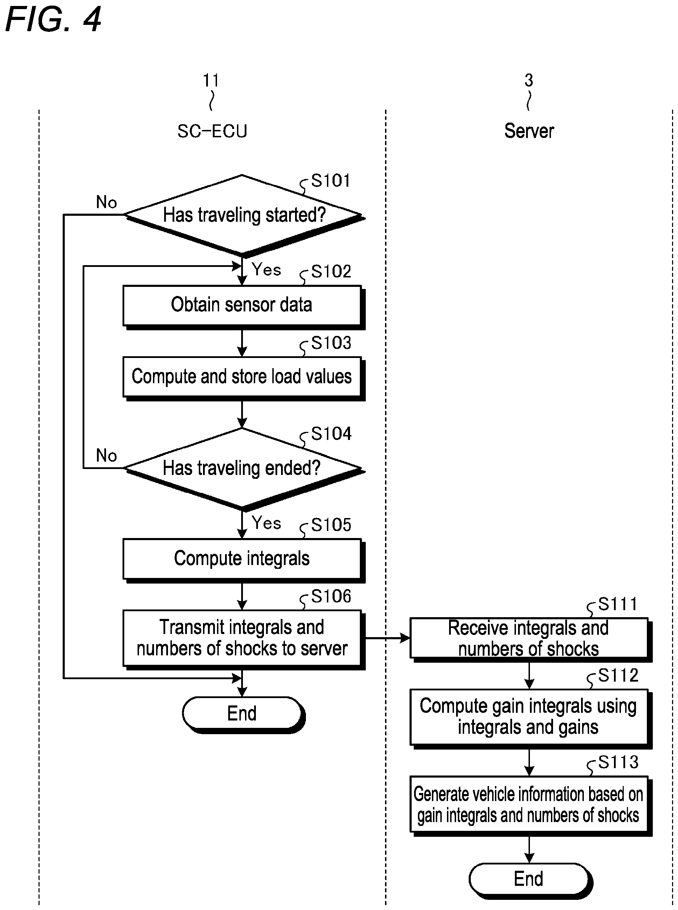

FIG. 4 is a flowchart showing an example of a process performed by the vehicle information generation system 1 of the first embodiment. The SC-ECU 11 determines whether or not traveling of the vehicle 2 has started (S101). If traveling has not started (S101: No), then this routine ends. If traveling has started (S101: Yes), then the computing part 101 of the SC-ECU 11 obtains sensor data, etc., through the CAN 20 (S102), and computes load values based on the sensor data, etc., and stores the load values (S103). Thereafter, the SC-ECU 11 determines whether or not traveling of the vehicle 2 has ended (S104). If traveling has not ended (S104: No), then step S102 is performed again. By this, load values computed during traveling are accumulated in an appropriate storage device mounted on the vehicle 2. If traveling has ended (S104: Yes), then the integral processing part 102 of the SC-ECU 11 computes integrals of the load values accumulated during traveling (e.g., at least one of an integral of sprung acceleration, an integral of unsprung acceleration, an integral of the amount of warp, an integral of forward-backward acceleration, and an integral of left-right acceleration) (S 105). Then, the transmission processing part 103 of the SC-ECU 11 transmits the computed integrals and the numbers of shocks to the server 3 (S106).

When the receiving part 201 of the server 3 receives the integrals and numbers of shocks transmitted from the SC-ECU 11 (S111), the gain processing part 202 computes gain integrals obtained by multiplying the integrals by gains (S112). Then, the generating part 204 generates vehicle information, based on the gain integrals and the numbers of shocks (S 113). The thus generated vehicle information is stored so as to be associated with identification information, etc., of the vehicle 2, and is outputted to a predetermined output destination.

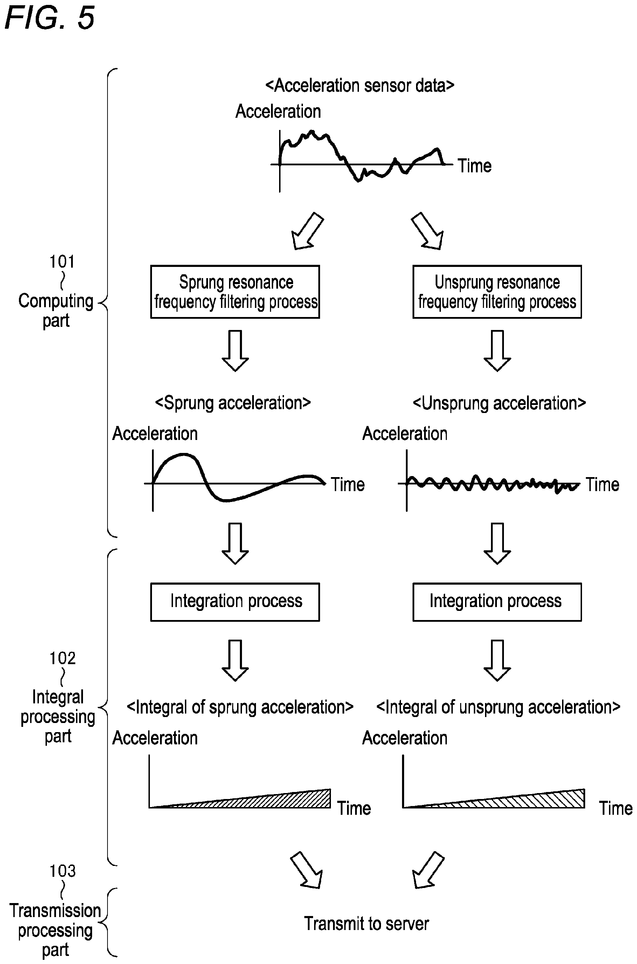

A case of generating vehicle information based on sprung acceleration, unsprung acceleration, and the amount of warp will be described below with reference to FIGS. 5 to 8.

FIG. 5 is a diagram conceptually showing an example of a process performed by the SC-ECU 11 upon computing an integral of sprung acceleration and an integral of unsprung acceleration of the first embodiment. The computing part 101 computes sprung acceleration representing changes in acceleration over time for the sprung resonance frequency band, by performing a sprung resonance frequency filtering process (low-pass filtering process) that extracts acceleration data for the sprung resonance frequency band from acceleration sensor data obtained from the acceleration sensors 14A and 14B. In addition, the computing part 101 computes unsprung acceleration representing changes in acceleration over time for the unsprung resonance frequency band, by performing an unsprung resonance frequency filtering process (high-pass filtering process) that extracts acceleration data for the unsprung resonance frequency band from the acceleration sensor data. Thereafter, the integral processing part 102 performs an integration process on the sprung acceleration, thereby computing an integral of the sprung acceleration, and performs an integration process on the unsprung acceleration, thereby computing an integral of the unsprung acceleration. The thus computed integral of the sprung acceleration and integral of the unsprung acceleration are transmitted by the transmission processing part 103 to the server 3 at predetermined timing (e.g., at the travel end time).

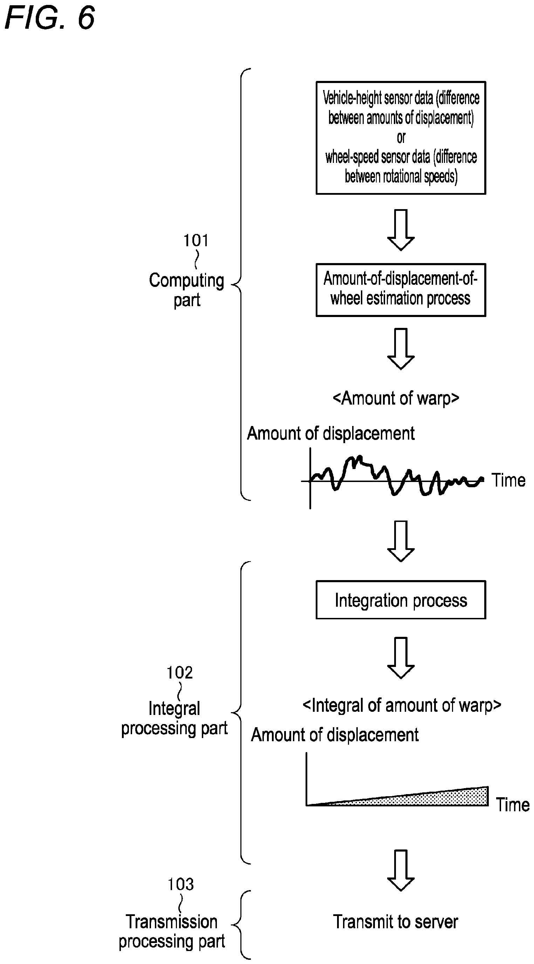

FIG. 6 is a diagram conceptually showing an example of a process performed by the SC-ECU 11 upon computing an integral of the amount of warp of the first embodiment. The computing part 101 computes the amount of warp representing changes in the amount of displacement over time, by performing an amount-of-displacement-of-wheel estimation process in which the amount of displacement of each wheel is estimated from vehicle-height sensor data of the wheels (a difference between the vehicle-height values of a pair of wheels located on a diagonal line, etc.) which is obtained from the vehicle-height sensors 14C. Thereafter, the integral processing part 102 performs an integration process on the amount of warp, thereby computing an integral of the amount of warp. The thus computed integral of the amount of warp is transmitted by the transmission processing part 103 to the server 3 at predetermined timing (e.g., at the travel end time). In addition, the amount of warp may be computed by performing an amount-of-displacement-of-wheel estimation process in which the amount of displacement of each wheel is estimated from wheel-speed sensor data of the wheels (a difference between the rotational speeds of a pair of wheels located on a diagonal line, etc.) which is obtained from the wheel-speed sensors 14D.

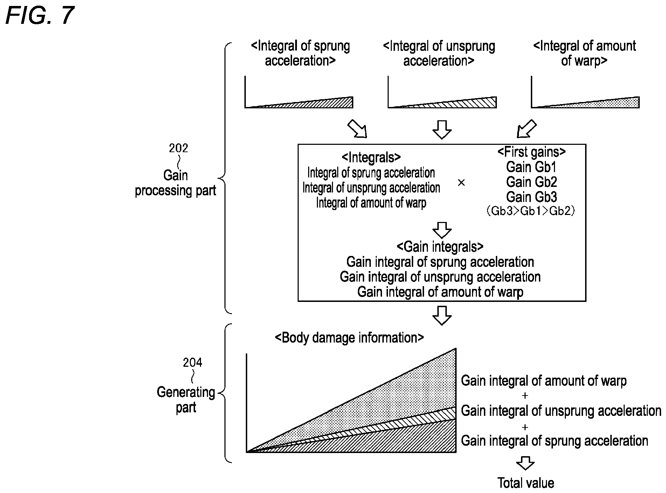

FIG. 7 is a diagram conceptually showing an example of a process performed by the server 3 upon generating body damage information, based on an integral of sprung acceleration, an integral of unsprung acceleration, and an integral of the amount of warp of the first embodiment. The body damage information is an example of vehicle information and is information about damage to the vehicle-body portions of the vehicle 2.

The gain processing part 202 computes gain integrals (a gain integral of sprung acceleration, a gain integral of unsprung acceleration, and a gain integral of the amount of warp) obtained by multiplying integrals (an integral of the sprung acceleration, an integral of the unsprung acceleration, and an integral of the amount of warp) received from the SC-ECU 11, by first gains (a gain Gb1, a gain Gb2, and a gain Gb3). The first gains are gains for the vehicle-body portions for which body damage information is generated, and include one or more gains that are set in advance for each type of load value. The first gains of the present embodiment include the gain Gb1 for sprung acceleration, the gain Gb2 for unsprung acceleration, and the gain Gb3 for the amount of warp, and a relationship Gb3 > Gb 1 > Gb2 holds true. Such a magnitude relationship between the gains Gb 1, Gb2, and Gb3 is determined based on the level of influence of each load value on the vehicle-body portions. Here, the level of influence of each load value on the vehicle-body portions is considered to increase in the order of unsprung acceleration, sprung acceleration, and the amount of warp, and thus, a magnitude relationship such as that described above is set.

The generating part 204 determines a total value of the plurality of gain integrals (the gain integral of sprung acceleration, the gain integral of unsprung acceleration, and the gain integral of the amount of warp) computed by the gain processing part 202 in the above-described manner, to be body damage information indicating the magnitude of damage to the vehicle-body portions. In this case, it can be evaluated that the larger the total value, the greater the damage to the vehicle-body portions.

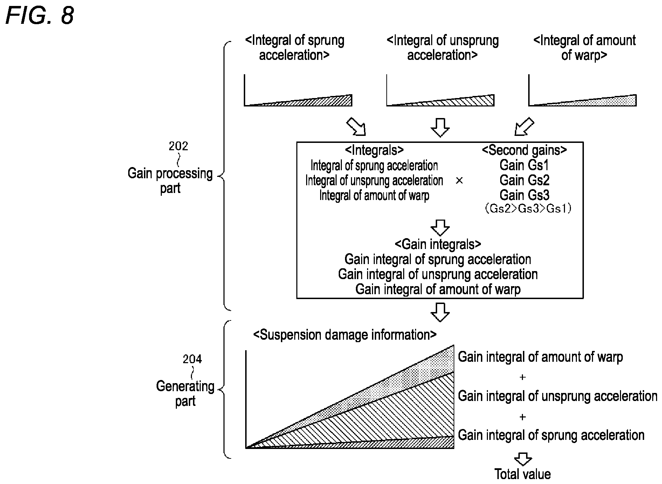

FIG. 8 is a diagram conceptually showing an example of a process performed by the server 3 upon generating suspension damage information, based on an integral of sprung acceleration, an integral of unsprung acceleration, and an integral of the amount of warp of the first embodiment. The suspension damage information is an example of vehicle information and is information about damage to the suspension mechanisms 24.

The gain processing part 202 computes gain integrals (a gain integral of sprung acceleration, a gain integral of unsprung acceleration, and a gain integral of the amount of warp) obtained by multiplying integrals (an integral of the sprung acceleration, an integral of the unsprung acceleration, and an integral of the amount of warp) received from the SC-ECU 11, by second gains (a gain Gs1, a gain Gs2, and a gain Gs3). The second gains are gains for the suspension mechanisms 24 for which suspension damage information is generated, and include one or more gains that are set in advance for each type of load value. The second gains of the present embodiment include the gain Gs 1 for sprung acceleration, the gain Gs2 for unsprung acceleration, and the gain Gs3 for the amount of warp, and a relationship Gs2 > Gs3 > Gs1 holds true. Such a magnitude relationship between the gains Gs1, Gs2, and Gs3 is determined based on the level of influence of each load value on the suspension mechanisms 24. Here, the level of influence of each load value on the suspension mechanisms 24 is considered to increase in the order of sprung acceleration, the amount of warp, and unsprung acceleration, and thus, a magnitude relationship such as that described above is set.

The generating part 204 determines a total value of the plurality of gain integrals (the gain integral of sprung acceleration, the gain integral of unsprung acceleration, and the gain integral of the amount of warp) computed by the gain processing part 202 in the above-described manner, to be suspension damage information indicating the magnitude of damage to the suspension mechanisms 24. In this case, it can be evaluated that the larger the total value, the greater the damage to the suspension mechanisms 24.

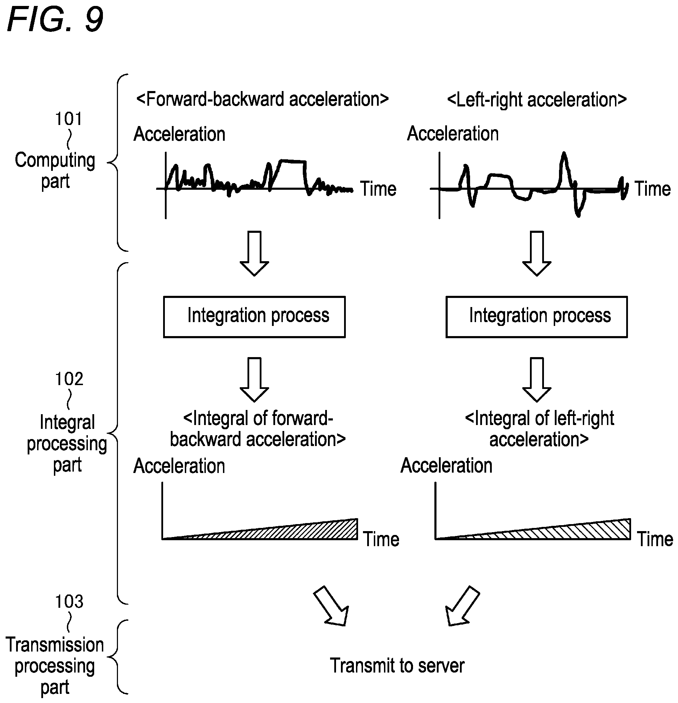

A case of generating vehicle information based on forward-backward acceleration and left-right acceleration will be described below with reference to FIGS. 9 to 11.

FIG. 9 is a diagram conceptually showing an example of a process performed by the SC-ECU 11 upon computing an integral of forward-backward acceleration and an integral of left-right acceleration of the first embodiment. The computing part 101 computes forward-backward acceleration representing changes in acceleration over time applied in the front-rear direction of the vehicle 2, and left-right acceleration representing changes in acceleration over time applied in the left-right direction of the vehicle 2, from acceleration sensor data obtained from the acceleration sensors 14A and 14B. Thereafter, the integral processing part 102 performs an integration process on the forward-backward acceleration, thereby computing an integral of the forward-backward acceleration, and performs an integration process on the left-right acceleration, thereby computing an integral of the left-right acceleration. The thus computed integral of the up-down acceleration and integral of the left-right acceleration are transmitted by the transmission processing part 103 to the server 3 at predetermined timing (e.g., at the travel end time).

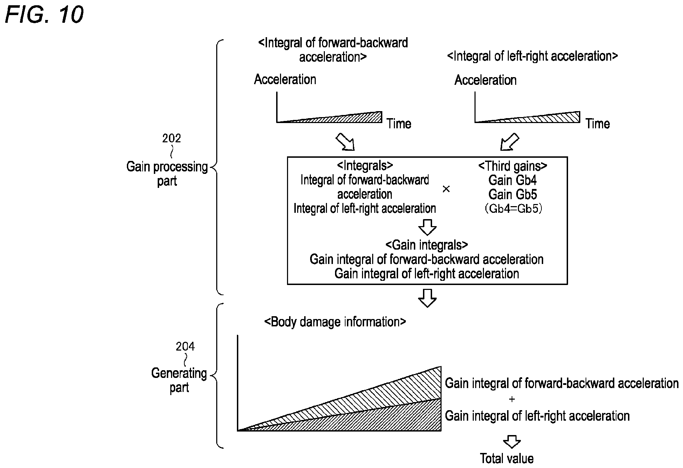

FIG. 10 is a diagram conceptually showing an example of a process performed by the server 3 upon generating body damage information, based on an integral of forward-backward acceleration and an integral of left-right acceleration of the first embodiment.

The gain processing part 202 computes gain integrals (a gain integral of forward-backward acceleration and a gain integral of left-right acceleration) obtained by multiplying integrals (an integral of the forward-backward acceleration and an integral of the left-right acceleration) received from the SC-ECU 11, by third gains (an example of gains for a body). The third gains are gains for the vehicle-body portions for which body damage information is generated, and include a gain Gb4 for forward-backward acceleration and a gain Gb5 for left-right acceleration, and a relationship Gb4 = Gb5 holds true. Such a relationship holds true because it is considered that there is almost no difference in the level of influence on the vehicle-body portions between forward-backward acceleration and left-right acceleration.

The generating part 204 determines a total value of the gain integral of forward-backward acceleration and the gain integral of left-right acceleration which are computed by the gain processing part 202 in the above-described manner, to be body damage information indicating the magnitude of damage to the vehicle-body portions. In this case, it can be evaluated that the larger the total value, the greater the damage to the vehicle-body portions.

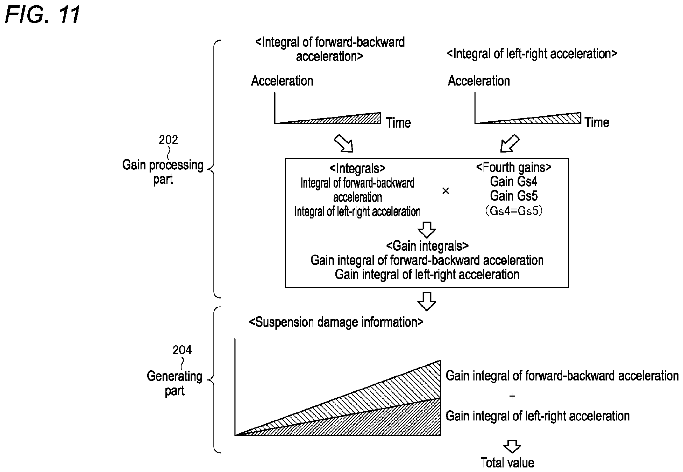

FIG. 11 is a diagram conceptually showing an example of a process performed by the server 3 upon generating suspension damage information, based on an integral of forward-backward acceleration and an integral of left-right acceleration of the first embodiment.

The gain processing part 202 computes gain integrals (a gain integral of forward-backward acceleration and a gain integral of left-right acceleration) obtained by multiplying integrals (an integral of the forward-backward acceleration and an integral of the left-right acceleration) received from the SC-ECU 11, by fourth gains (an example of gains for a suspension). The fourth gains are gains for the suspension mechanisms 24 for which suspension damage information is generated, and include a gain Gs4 for forward-backward acceleration and a gain Gs5 for left-right acceleration, and a relationship Gs4 = Gs5 holds true. Such a relationship holds true because it is considered that there is almost no difference in the level of influence on the suspension mechanisms 24 between forward-backward acceleration and left-right acceleration.

The generating part 204 determines a total value of the gain integral of forward-backward acceleration and the gain integral of left-right acceleration which are computed by the gain processing part 202 in the above-described manner, to be suspension damage information indicating the magnitude of damage to the vehicle-body portions. In this case, it can be evaluated that the larger the total value, the greater the damage to the suspension mechanisms 24.

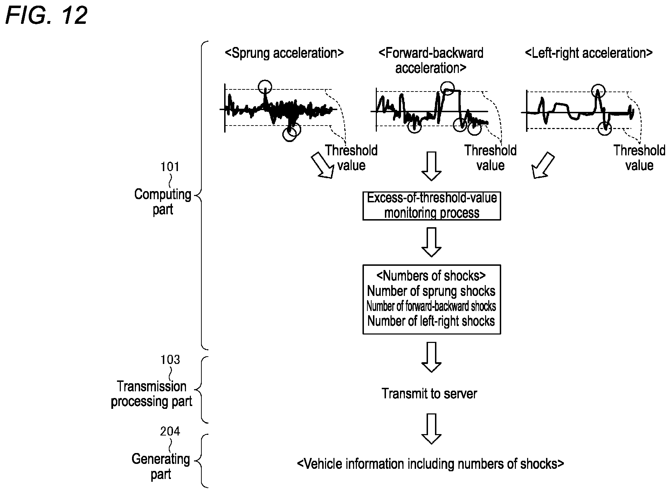

A case of generating vehicle information based on the numbers of shocks will be described below with reference to FIG. 12.

FIG. 12 is a diagram conceptually showing an example of processes performed by the SC-ECU 11 and the server 3 upon generating vehicle information, based on the numbers of shocks of the first embodiment. The computing part 101 of the SC-ECU 11 performs a process of monitoring whether or not each of sprung acceleration, forward-backward acceleration, and left-right acceleration has exceeded its preset threshold values during traveling of the vehicle 2 (excess-of-threshold-value monitoring process), thereby obtaining the numbers of shocks each representing the number of times corresponding acceleration has exceeded its threshold values. The numbers of shocks of the present embodiment include the number of sprung shocks representing the number of times the sprung acceleration has exceeded its threshold values, the number of forward-backward shocks representing the number of times the forward-backward acceleration has exceeded its threshold values, and the number of left-right shocks representing the number of times the left-right acceleration has exceeded its threshold values. The thus computed numbers of shocks are transmitted by the transmission processing part 103 to the server 3 at predetermined timing (e.g., at the travel end time).

The generating part 204 of the server 3 generates vehicle information including the numbers of shocks transmitted from the SC-ECU 11 in the above-described manner. It can be evaluated that the larger the numbers of shocks, the greater the damage to the vehicle 2.

As described above, according to the present embodiment, integrals obtained by integrating load values obtained during traveling of the vehicle are transmitted from the vehicle to the server, and vehicle information about damage to the vehicle is generated based on the integrals. By this, the amount of data communication and the frequency of communication can be suppressed to low levels over a case in which load values are transmitted as they are from the vehicle to the server. In addition, vehicle information is generated based on gain integrals obtained by multiplying the integrals by gains set for each part of the vehicle. By this, vehicle's part-by-part damage can be accurately estimated. Namely, according to the present embodiment, high-reliability vehicle information can be generated without increasing communication load.

Note that although the above-described embodiment exemplifies a configuration in which functional components (the computing part 101, the integral processing part 102, and the transmission processing part 103) on a vehicle 2 side for generating vehicle information are included in the SC-ECU 11, these functional components may be included in other ECUs such as the MC-ECU 10.

Another embodiment will be described below with reference to drawings, and the same parts as or similar parts to those in the first embodiment are given the same reference signs and description thereof may be omitted.

### (Second Embodiment)

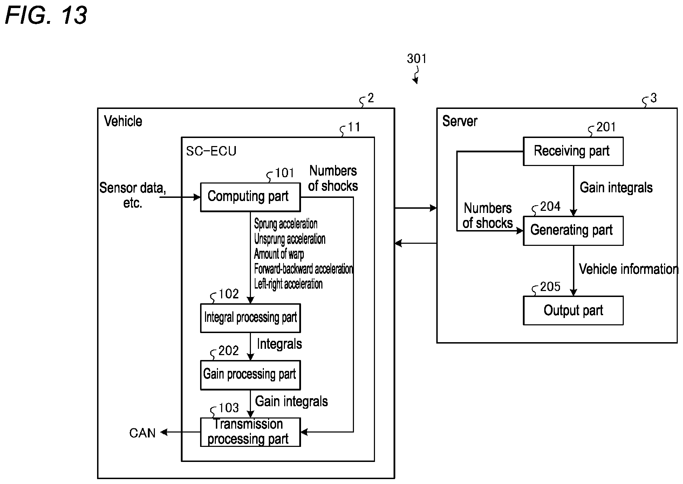

FIG. 13 is a block diagram showing an example of a configuration of a vehicle information generation system 301 of a second embodiment. The present embodiment differs from the first embodiment in that the gain processing part 202 is provided on the vehicle 2 side, and gain integrals are transmitted from the vehicle 2 to the server 3.

The SC-ECU 11 of the present embodiment includes the computing part 101, the integral processing part 102, the gain processing part 202, and the transmission processing part 103. The gain processing part 202 of the present embodiment computes gain integrals by multiplying integrals computed by the integral processing part 102 by the above-described gains. The transmission processing part 103 of the present embodiment performs a process for transmitting the gain integrals computed by the gain processing part 202 and the numbers of shocks computed by the computing part 101 to the server 3.

The server 3 of the present embodiment includes the receiving part 201, the generating part 204, and the output part 205. The receiving part 201 of the present embodiment receives the gain integrals and numbers of shocks transmitted from the SC-ECU 11. The generating part 204 of the present embodiment generates vehicle information, based on the gain integrals and/or the numbers of shocks received by the receiving part 201.

As in the present embodiment, a gain process for integrals may be performed on the vehicle 2 side. Even by such a configuration, high-reliability vehicle information can be generated without increasing communication load.

A program that causes computers (the SC-ECU 11, the server 3, etc.) to perform processes for implementing functions of a vehicle information generation system such as that described above may be stored in a file in installable or executable format and in a computer-readable storage medium, such as a CD-ROM, a CD-R, a memory card, a Digital Versatile Disk (DVD), or a flexible disk (FD), and provided as a computer program product. In addition, the program may be stored on a computer connected to a network such as the Internet, and provided by downloading the program via the network. In addition, the program may be provided or distributed via a network such as the Internet.

Although the embodiments of the present invention have been described above, the above-described embodiments are presented as examples and are not intended to limit the scope of the invention. The new embodiments can be implemented in various other modes, and various omissions, substitutions, or changes can be made without departing from the spirit of the invention. The embodiments and variants thereof are included in the scope and spirit of the invention and included in inventions described in the claims and in the range of equivalency thereof.

### REFERENCE SIGNS LIST

1, 301: Vehicle information generation system, 2: Vehicle, 3: Server, 5: Communication network, 10: MC-ECU, 11: SC-ECU, 12: Communication I/F, 13: User I/F, 14: In-vehicle sensor, 14A, 14B: Acceleration sensor, 14C: Vehicle-height sensor, 14D: Wheel-speed sensor, 20: CAN, 21: Drive mechanism, 22: Brake mechanism, 23: Steering mechanism, 24: Suspension mechanism, 31: CPU, 32: RAM, 33: ROM, 34: Storage, 35: Communication I/F, 36: User I/F, 51: Vehicle body, 101: Computing part, 102: Integral processing part, 103: Transmission processing part, 201: Receiving part, 202: Gain processing part, 203: Gain setting part, 204: Generating part, and 205: Output part

## Claims

1. A vehicle information generation system comprising: an electronic control device mounted on a vehicle; and a server that is allowed to communicate with the electronic control device through a communication network, wherein
the electronic control device includes:
a computing part that computes a plurality of types of load value about load applied to the vehicle during traveling, based on results of detection obtained by a sensor mounted on the vehicle;
an integral processing part that computes integrals of the load values; and
a transmission processing part that performs a process for transmitting the integrals to the server, and
the server includes:
a gain processing part that computes gain integrals obtained by multiplying the integrals by gains, the gains being set for each part of the vehicle and for each of the load values; and
a generating part that generates vehicle information about damage to the vehicle, based on a total value obtained by adding together the plurality of gain integrals corresponding to the respective plurality of types of load value.

2. The vehicle information generation system according to claim 1, wherein the vehicle information includes body damage information generated based on a total value of the plurality of gain integrals computed using gains for a body, the body damage information being information about damage to a vehicle-body portion; and suspension damage information generated based on a total value of the plurality of gain integrals computed using gains for a suspension, the suspension damage information being information about damage to the suspension, and the gains for a suspension being different from the gains for a body.

3. The vehicle information generation system according to claim 1 or 2, wherein
the load values include sprung acceleration for a predetermined sprung resonance frequency band, and
the computing part performs a filtering process in which acceleration data outside the sprung resonance frequency band is removed.

4. The vehicle information generation system according to any one of claims 1 to 3, wherein
the load values include unsprung acceleration for a predetermined unsprung resonance frequency band, and
the computing part performs a filtering process in which acceleration data outside the unsprung resonance frequency band is removed.

5. The vehicle information generation system according to any one of claims 1 to 4, wherein
the load values include an amount of warp about torsion of a vehicle body, and
the computing part computes the amount of warp, based on a difference between vehicle-height values of a plurality of wheels or a difference between rotational speeds of a plurality of wheels.

6. The vehicle information generation system according to any one of claims 1 to 5, wherein the load values include forward-backward acceleration applied in a front-rear direction of the vehicle.

7. The vehicle information generation system according to any one of claims 1 to 6, wherein the load values include left-right acceleration applied in a left-right direction of the vehicle.

8. The vehicle information generation system according to any one of claims 1 to 7, wherein
the load values include a number of shocks in which any of the load values has exceeded threshold values, and
the generating part generates the vehicle information, based on the number of shocks.

9. The vehicle information generation system according to any one of claims 1 to 8, wherein
the integral processing part computes the integrals with respect to time from travel start time to travel end time of the vehicle, and
the transmission processing part performs a process for transmitting the integrals to the server at the travel end time.

10. The vehicle information generation system according to any one of claims 1 to 9, wherein the server further includes a gain setting part that is allowed to change the gains.

11. A vehicle information generation system comprising: an electronic control device mounted on a vehicle; and a server that is allowed to communicate with the electronic control device through a communication network, wherein
the electronic control device includes:
a computing part that computes a plurality of types of load value about load applied to the vehicle during traveling, based on results of detection obtained by a sensor mounted on the vehicle;
an integral processing part that computes integrals of the load values;
a gain processing part that computes gain integrals obtained by multiplying the integrals by gains, the gains being set for each part of the vehicle and for each of the load values; and
a transmission processing part that performs a process for transmitting the gain integrals to the server, and
the server includes:
a generating part that generates vehicle information about damage to the vehicle, based on a total value obtained by adding together the plurality of gain integrals corresponding to the respective plurality of types of load value.

12. An electronic control device mounted on a vehicle, the electronic control device comprising:
a computing part that computes a plurality of types of load value about load applied to the vehicle during traveling, based on results of detection obtained by a sensor mounted on the vehicle;
an integral processing part that computes integrals of the load values; and
a transmission processing part that performs a process for transmitting the integrals to a server through a communication network, the server being present external to the vehicle.

13. An electronic control device mounted on a vehicle, the electronic control device comprising:
a computing part that computes a plurality of types of load value about load applied to the vehicle during traveling, based on results of detection obtained by a sensor mounted on the vehicle;
an integral processing part that computes integrals of the load values;
a gain processing part that computes gain integrals obtained by multiplying the integrals by gains, the gains being set for each part of the vehicle and for each of the load values; and
a transmission processing part that performs a process for transmitting the gain integrals to a server through a communication network, the server being present external to the vehicle.
